# EUROPEAN PATENT SPECIFICATION

(11) **EP 2 501 728 B1**
(45) Date of publication and mention of the grant of the patent: **07.01.2015**
(21) Application number: 10832245.4
(22) Date of filing: 19.11.2010
(51) Int. Cl.: C08F 26/00

(54) **ALKYL LACTAM ESTER POLYMERS, AND USES THEREOF**
ALKYL-LACTAM-ESTER-POLYMERE UND IHRE VERWENDUNG
POLYMÈRES D'ESTER ALKYLIQUE DE LACTAME ET LEURS UTILISATIONS

(30) Priority: 20.11.2009 US 263066 P
(43) Date of publication of application: 26.09.2012
(73) Proprietor: Isp Investments Inc., Wilmington, DE 19805 (US)
(72) Inventor: MUSA, Osama, M., Hillsborough, NJ 08844 (US)
(74) Representative: Brosch, Oliver
(86) International application number: PCT/US2010/057385
(87) International publication number: WO 2011/063208

(56) References cited:
- WO-A1-2008/142003
- US-A- 5 880 234
- US-B1- 6 255 034
- US-B1- 6 268 511
- US-B1- 6 465 588

## Description

### CROSS-REFERENCE TO RELATED APPLICATION

This application claims the benefit of U.S. Provisional Application Serial No. 61/263,066 filed November 20, 2009.

### BACKGROUND OF THE INVENTION

### Field of the Invention

The present invention advances polymer design and aids their application by providing polymers derived in part from at least a first polymerizable unit comprising a lactam functional group and an ester functional group, and at least one second polymerizable unit selected from the group consisting of alkylacrylamides excluding acrylamide and methacrylamide, cinnamyls, maleimides, vinyl imidazoles, vinyl triazoles, vinyl silanes, vinyl siloxanes, vinyl sulfones, benzoxazines, oxazolines, and oxetanes. The polymer is a random, blocked, or alternating polymer.

The polymers of the invention may find useful service in any number of arts, including (but not limited to): adhesive, agricultural, biocides, cleaning, coating, electronics, encapsulation, membrane, microelectronics, oilfield, performance chemical, personal care, sealant, and sensor applications.

### Description of Related Art

*N-*vinyl lactam-based polymers are those polymers having a lactam group, such as pyrrolidone or caprolactam, where the lactam nitrogen is directly bonded to the polymer backbone. These polymers, which include poly(*N-*vinyl-2-pyrrolidone), poly(*N-*vinyl-ε-caprolactam), and poly(*N-*vinyl-2-pyrrolidone-co-*N-*vinyl acetate), are available in a wide range of molecular weights, which allows them to find use in many application arts, e.g., as film formers, protective colloids, and suspending agents, among many other uses. A description of these applications and properties is provided in the technical brochure "PVP Polyvinylpyrrolidone Polymers," published by International Specialty Products.

The success of *N-*vinyl lactam polymers is attributed in part to the chemical structure of the lactam group. With its lone pair of electrons, the lactam nitrogen can form hydrogen bonds with compounds containing -OH and -NH groups. Such interactions can be manifested in a variety of properties, which include adhesion (*e.g*., glue sticks, hair styling, tablet binder), crystallization inhibitor (*e.g.,* gas hydrates, sucrose solutions), and complexation agent (*e.g.,* dyes, active ingredients).

In addition to the molecular weight, the number of carbon atoms in the lactam ring can be varied. Commonly known lactams include those from three carbon atoms/one nitrogen atom in the ring *(propiolactam)* up to six carbon atoms/one nitrogen atom in the ring (*heptanolactam*). Increasing the number of carbon atoms in the ring alters the molecule's water hydrophilicity/hydrophobicity balance. Although both poly(*N-*vinyl-2-pyrrolidone) and poly(*N*-vinyl-ε-caprolactam) are water soluble, the former is more hydrophilic, absorbing more water in humid environments than the latter.

However, the available ranges in lactam ring size and polymer molecular weight are insufficient to design new monomers and polymers with truly new functionality. For example, because the nitrogen atom of *N*-vinyl lactams is directly attached to the polymer backbone without a spacer group, there are limited options to modulate the hydrophilicity/hydrophobicity balance of the molecule, or to alter a relatively high glass transition temperature [180°C for poly(*N-*vinyl-2-pyrrolidone)]. A new approach is needed that alters the structure of the *N-*vinyl lactam structure to facilitate new properties and end applications.

To attain different properties current technology relies on copolymerizing other monomer units together with the *N-*vinyl lactam unit. Many such polymers are known, and include those formed with *N-*vinyl acetate, styrene, dimethylaminoethylmethacrylate, dimethylaminopropylmethacrylamide, acrylic acid, and lauryl methacrylate. A number of properties can be altered through these copolymerizations, including hydrophobicity/hydrophilicity, film formation, flexibility, foaming ability, humidity response, viscosity, gloss, and tack. While copolymerizations produce valuable products, they are, in essence, pursued when the homopolymer cannot provide the desired properties. Desired are new lactam-based monomers and polymers thereof that offer expanded functionality.

In addition to functionality limitations, *N-*vinyl lactam based polymers require production methods and analytical testing to ensure sufficiently low residual monomer. Needed are next-generation lactam-based compounds that provide new properties and also are free of *N*-vinyl lactam monomer.

There is a related family of compounds, also based on *N-*alkyl lactams, that help extend the lactam functionality, in which an alkyl group is covalently bonded to the lactam nitrogen. Various *N-*alkyl lactams are known, and include *N-*methyl-2-pyrrolidone, *N-*ethyl-2-pyrrolidone, *N*-hydroxyethyl-2-pyrrolidone, *N-*cyclohexyl-2-pyrrolidone, *N-*octyl-2-pyrrolidone, and *N-*dodecyl-2-pyrrolidone, all of which are offered for commercial sale by International Specialty Products (Wayne, NJ). Also known is *N-*hydroxymethyl-2-caprolactam (Benson, 1948). These non-polymeric chemicals find application as solvents, surface tension reducers, and low-foaming surface wetting agents.

Several modified *N-*vinyl lactams via *N-*alkyl lactams are described in the following documents: U.S. Patent Nos.: 2,882,262; 4,008,247; 4,189,601; 4,190,582; 4,191,833; 4,191,834; 4,439,616; 4,609;706; 5,252,689; 5,466,770; 5,523,340; 5,629,359; 6,132,462; 6,369,163; 6,630,599; 6,902,740; and U.S. Patent Application Publication No. 2007/123,673; and foreign patents: EP385,918; EP550,744; GB 924,623; GB 930,668; GB 1,404,989; and foreign patent applications: WO91/12243; WO02/42383; WO03/006568; WO2007/051738; WO 2008/098885, WO 2008/098887; and WO 2008/142003. Many of these publications describe various esters of *N*-hydroxyalkyllactams, such as *N-*hydroxyethylpyrrolidone.

Plastic compatibilizers that contain *N*-pyrrolidone-containing compounds are disclosed in U.S. Pat. No. 6,369,163. Compatibilizers are taught to be "polymers which preferably attach themselves to the interface between the polymers involved, or which penetrate into the polymers, thereby improving the adhesion between the polymers involved."

A description of oil-soluble polymers is given in GB 924,623, wherein the polymers are prepared by a multi-step polymerization process. Such a method produces polymers with specific arrangements of the repeating polymerizable units that are unlike those from a one-step process.

Several copolymers and terpolymers having the ester of an *N-*hydroxyalkyl lactam as one unit are disclosed in U.S. Patent Nos. 2,882,262; 4,983,684; 5,043,455; and 6,369,163; U.S. Patent Application Publication No. 2007/123673; foreign patents GB 924,623; GB 930,668; GB 1,404,989; JP 3020323; and KR 100212333; and foreign patent applications WO 03/006568 and EP 385918.

Given the problems that yet exist in the processing and application arts of these types of polymers, it would be a valuable contribution to facilitate polymer design to provide expanded chemical functionality and performance attributes over known polymers based on *N-*vinyl lactam chemistry.

### SUMMARY OF THE INVENTION

New polymers have been discovered that provide a multitude of functional design options, including selectable hydrophilic-to-hydrophobic balance. These polymers are derived from at least one first polymerizable unit comprising a lactam functional group and an ester functional group, and at least one second polymerizable unit selected from the group consisting of alkylacrylamides excluding acrylamide and methacrylamide, cinnamyls, maleimides, vinyl imidazoles, vinyl triazoles, vinyl silanes, vinyl siloxanes, vinyl sulfones, benzoxazines, oxazolines, and oxetanes, wherein the polymer is a random, blocked, or alternating polymer.

In preferred embodiments the polymer is a copolymer or a terpolymer.

The polymers and compositions thereof find application in a wide variety of arts, including the adhesive, agricultural, biocides, cleaning, coating, electronics, encapsulation, membrane, microelectronics, oilfield, performance chemical, personal care, sealant, and sensor arts.

### DETAILED DESCRIPTION OF THE INVENTION

The present invention describes an entirely new class of polymers that extend *N-*hydroxyalkyl lactam chemistry, resolving some of the deficiencies noted with existing *N-*vinyl lactams, affording new properties that have not been possible with *N-*vinyl lactam polymers. These polymers are derived from at least one first polymerizable unit comprising a lactam functional group and an ester functional group, and at least one second polymerizable unit selected from the group consisting of alkylacrylamides excluding acrylamide and methacrylamide, cinnamyls, maleimides, vinyl imidazoles, vinyl triazoles, vinyl silanes, vinyl siloxanes, vinyl sulfones, benzoxazines, oxazolines, and oxetanes, wherein said the is a random, blocked, or alternating polymer.

As used herein, the following terms have the meanings set out below:

The term *direct bond* means that the group can be nothing.

The term *halogen* refers to chloro, bromo, iodo and fluoro, and is preferably bromo or chloro.

The term *heteroatom* refers to atoms such as oxygen, nitrogen, sulfur, and phosphorus.

The designation of a *squiggly bond* in a chemical structure means that bond can be oriented to form the *trans* or *cis* stereoisomer of the compound. For example, by this definition the structure: 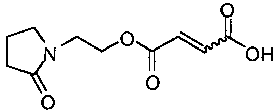 is taken to mean both the *trans* stereoisomer: 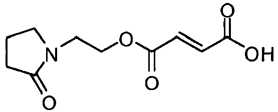 and the *cis* stereoisomer:

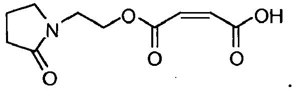

The symbol of a *bond to the middle of group* means that the bond can be attached to either atom at the group, meaning the structure is referring to a mixture of isomers. For example, the structure below: 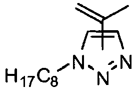 refers to both the 1,4- and 1,5-octyl methyl vinyl triazole isomers.

The term *small molecule* refers to two or more atoms held together by covalent bonds, typically with a molecular weight less than about 2000 atomic mass units (amu).

The term *monomer* refers to the repeat units that comprise a polymer. A monomer is a compound that chemically bonds to other molecules, including other monomers, to form a polymer.

The terms *polymer* refers to a molecule comprising multiple monomer units connected by covalent chemical bonds. By this definition *polymer* encompasses molecules wherein the number of monomer units ranges from very few, which more commonly may be called oligomers, to very many. Nonlimiting examples of polymers include copolymers, terpolymers, tetramers, wherein the polymer is a random, blocked, or alternating polymer.

The term *homopolymer* refers to a molecule that comprises a single monomer, and includes such polymers wherein a small amount of polymerization solvent may be covalently bonded into the polymer.

The term *non-homopolymer* refers to a molecule that comprises two or more different monomers.

The term *copolymer* refers to a polymer that comprises two different monomer units.

The term *terpolymer* refers to a polymer that comprises three different monomer units.

The term *branched* refers to any non-linear molecular structure. To avoid any arbitrary delineation, the term *branched* describes both branched and hyperbranched structures.

The term *free radical addition polymerization initiator* refers to a compound used in a catalytic amount to initiate a free radical addition polymerization. The choice of initiator depends mainly upon its solubility and its decomposition temperature.

The term *inert solvent* refers to a solvent that does not interfere chemically with the reaction.

The term *personal care composition* refers to compositions intended for use on or in the human body, such as skin, sun, oil, hair, cosmetic, and preservative compositions, including those to alter the color and appearance of the skin and hair. Potential personal care compositions include, but are not limited to, compositions for increased flexibility in styling, durable styling, increased humidity resistance for hair, skin, and color cosmetics, sun care water-proof/resistance, wear-resistance, and thermal protecting/enhancing compositions.

The term *performance chemicals composition* refers to non-personal care compositions that serve a broad variety of applications, and include nonlimiting compositions such as: adhesives; agricultural, biocides, coatings, electronics, household-industrial-institutional (HI&I), inks, membranes, metal fluids, oilfield, paper, paints, plastics, printing, plasters, and wood-care compositions.

All percentages, ratios, and proportions used herein are based on a weight basis unless otherwise specified.

### Description of the polymers

In accordance with certain embodiments, the discovered polymers resolve some of the above noted problems with existing *N-*vinyl lactam compounds, and surprisingly find broad application in many application areas. The polymers are derived from at least one first polymerizable unit comprising a lactam functional group and an ester functional group, and at least one second polymerizable unit selected from the group consisting of alkylacrylamides excluding acrylamide and methacrylamide, cinnamyls, epoxies, maleimides, vinyl imidazoles, vinyl triazoles, vinyl silanes, vinyl siloxanes, vinyl sulfones, benzoxazines, oxazolines, and oxetanes, wherein the polymer is a random, blocked, or alternating polymer.

In accordance with particular embodiments, the polymers is a copolymer, comprising one first polymerizable unit and one second polymerizable unit, or is a terpolymer, comprising one first polymerizable unit and two different second polymerizable units.

Due to the extension of the lactam ring from the polymer backbone, and also to the profusion of possible structures for the first and second polymerizable units, polymers of the invention enable a wide variety of compositions, including (but not limited to) adhesive, agricultural, biocides, cleaning, coating, encapsulation, membrane, oilfield, performance chemical, or personal care compositions.

As described above, the polymer's first polymerizable unit comprises a lactam functional group and an ester functional group, and may be represented by the structure: 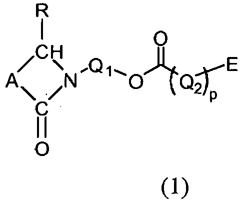 wherein:
A is an alkylene or alkenylene group comprising 2 to 50, more particularly 2 to 10, carbon atoms, wherein 2 to 4 carbon atoms reside in the lactam ring between the 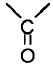 group and
the 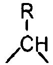 group;
E is a polymerizable moiety selected from the group consisting of: alkylacrylamides excluding acrylamide and methacrylamide, acrylates, allyl derivatives, benzoxanes, cinnamyls, epoxies, fumarates, maleates, maleimides, α,β-olefinically unsaturated carboxylic nitriles, oxazolines, oxetanes, styrenes, vinyl acetates, vinyl acrylamides, vinyl amides, vinyl carbonates, vinyl ethers, vinyl halides, vinyl imidazoles, vinyl lactams, vinyl pyridines, vinyl silanes, vinyl sulfones, and mixtures thereof;
**p** is 0 or 1;
each of **Q**₁ and **Q**₂ is independently selected from the group consisting of functionalized and unfunctionalized alkylene, alkenylene, cycloalkylene and arylene groups, wherein any of the beforementioned groups may be with or without heteroatoms and linear or branched, typically containing from 1 to 20, more particularly 1 to 10 and in certain cases from 1 to 6 carbon atoms; and
each of **R** is independently selected from the group consisting of hydrogen, and functionalized and unfunctionalized alkyl, cycloalkyl, alkenyl, and aryl groups, wherein any of the beforementioned groups may be with or without heteroatoms and linear or branched, typically containing from 1 to 20, more particularly 1 to 10 and in certain cases from 1 to 6 carbon atoms.

In addition to the first polymerizable unit, the polymers also comprise at least one second polymerizable unit selected from the group consisting of alkylacrylamides excluding acrylamide and methacrylamide, cinnamyls, epoxides, maleimides, vinyl imidazoles, vinyl triazoles, vinyl silanes, vinyl siloxanes, vinyl sulfones, benzoxazines, oxazolines, and oxetanes, the structures of which are generally known to one skilled in the art.

With the proper selection of the groups **Q**₁, **Q**₂, **E,** and the second polymerizable unit, polymers with a wide variety of hydrophilic-to-hydrophobic balance, even within one molecule, can be produced. Such functionality can extend the polymers' performance, especially with regard to solubility (including water and solvents solubility), solubilization capacity, glass transition temperature, flexibility, and miscibility with other ingredients in the intended application areas.

A provision to the invention is that when **Q**₁ is ethylene and **E** is an epoxy moiety that the second polymerizable unit is not an epoxide.

The polymer that comprises these first and second polymerizable units is a random, blocked, or alternating polymer.

Referring to structure (1), in preferred embodiments -**A**- groups that may reside in the lactam ring between the 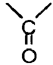 group and the 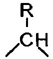 group include: 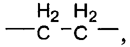 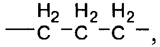 and 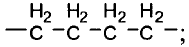 the formed lactam rings are pyrrolidone, piperidone, and caprolactam, respectively. Other members of the -**A**- group can be made by one skilled in the art without departing from the spirit of the current invention. Especially preferred -**A**- groups are 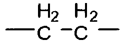 and 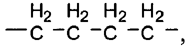 such that structure (1) can be described by the structures: 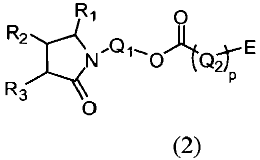 and

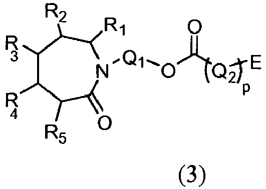

wherein each **R**₁ through **R**₅ is independently selected from the group consisting of hydrogen, and functionalized and unfunctionalized alkyl, cycloalkyl, alkenyl, and aryl groups, wherein any of the beforementioned groups may be with or without heteroatoms. In non-limiting, embodiments **R**₁ through **R**₅ are hydrogen, for which structures (2) and (3) take the forms: 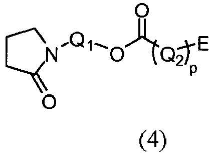 and

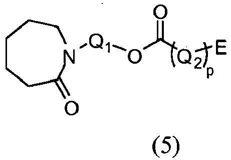

While **Q**₁ retains its earlier definition, in preferred embodiments **Q**₁ is independently selected from the group consisting of: arylene, functionalized arylene, methylene, ethylene, and propylene. Highly preferred choices of **Q**₁ are methylene, ethylene, propylene, isopropylene, *n*-butylene, methylpropylene, *n*-pentylene, and methylbutylene. Highly preferred examples of structures (4) and (5) are:

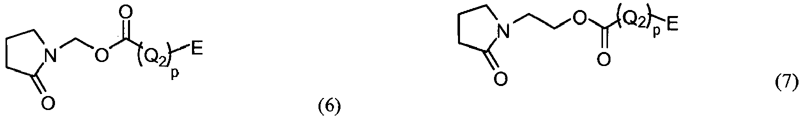

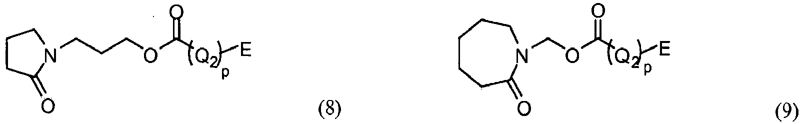

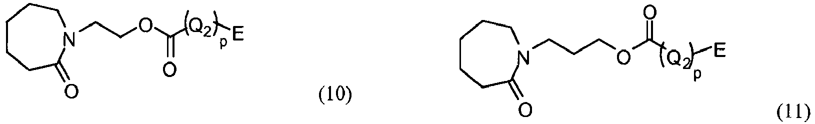

Special preference is given to structures (6)-(11) wherein the groups **(Q₂)-E** are the residue of an acrylate, (meth)acrylate, or anhydride following reaction with an *N-*hydroxyalkyl lactam. Such structures include those identified in U.S. Patent No. 2,882,262. One skilled in the art can identify a multitude of these highly preferred first polymerizable units, including structures (12)-(23):

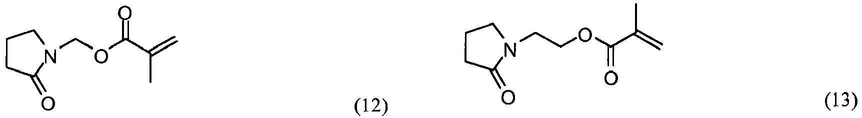

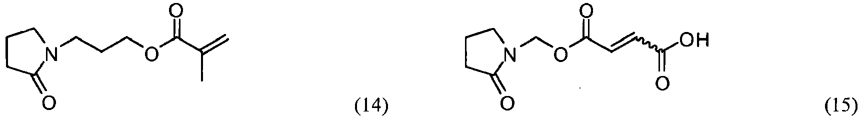

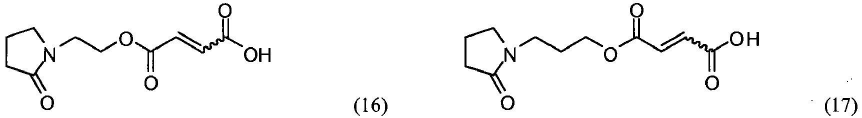

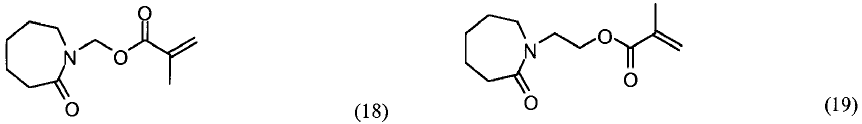

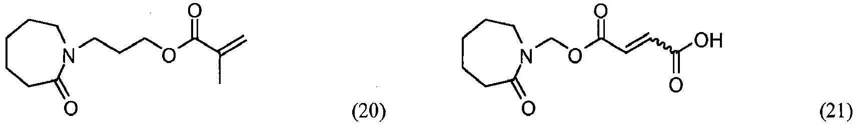

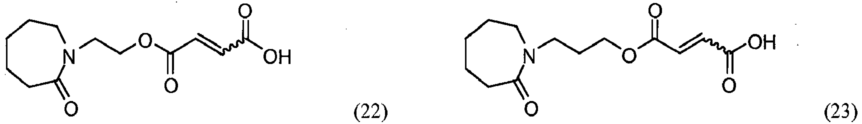

In addition to the abovedescribed first polymerizable unit, polymers of the invention also comprise at least one second polymerizable unit selected from the group consisting of alkylacrylamides excluding acrylamide and methacrylamide, cinnamyls, epoxides, maleimides, vinyl imidazoles, vinyl triazoles, vinyl silanes, vinyl siloxanes, vinyl sulfones, benzoxazines, oxazolines, and oxetanes.

### Synthesis of the first polymerizable unit

The first polymerizable unit, defined by structure (1), may be synthesized using methods recorded in the art, *e.g.,* by the reaction of an *N-*hydroxyalkyl lactam with an acrylate, (meth)acrylate, anhydride, or similar compounds. Production methods include those described in patents: U.S. Patent Nos. 2,882,262; 5,523,340; 6,369,163; U.S. Patent Application Publication 2007/123673; GB 924,623; 930,668; and 1,404,989; WO 03/006568; and EP 385918.

The lactam-containing monomers shown in structures (12)-(23) can be obtained from condensation reactions that include an *N-*hydroxyalkyl lactam and an unsaturated carboxylic acid, an acrylate, a (meth)acrylate, or an anhydride. Suitable *N-*hydroxyalkyl lactams include *N*-hydroxymethyl pyrrolidone and caprolactam, *N*-hydroxyethyl pyrrolidone and caprolactam, and *N*-hydroxypropyl pyrrolidone and caprolactam. Non-limiting examples of carboxylic acids that can be used include: acrylic acid, methacrylic acid, itaconic acid, crotonic acid, fumaric acid, maleic acid, succinic acid, and maleic acid. Similarly, acrylates and (meth)acrylates include (without limitation) methyl, ethyl, butyl, octyl, ethyl hexyl acrylates and their (meth)acrylate analogues. Representative anhydrides include formic anhydride, succinic anhydride, maleic anhydride, and acetic anhydride.

### Optional polymerizable units

In addition to the abovedescribed first polymerizable unit and the at least one second polymerizable unit selected from the group consisting of alkylacrylamides excluding acrylamide and methacrylamide, cinnamyls, maleimides, vinyl imidazoles, vinyl triazoles, vinyl silanes, vinyl siloxanes, vinyl sulfones, benzoxazines, oxazolines, and oxetanes; the polymers of the current invention may further comprise one or more optional polymerizable unit(s). These optional polymerizable unit(s) may be selected from the group consisting of: alkylacrylamides excluding acrylamide and methacrylamide, acrylates, allyl derivatives, benzoxanes, cinnamyls, epoxides, fumarates, maleates, maleimides, oxazolines, oxetanes, styrenes, vinyl acetates, vinyl acrylamides, vinyl carbonates, vinyl ethers, vinyl imidazoles, vinyl triazoles, vinyl lactams, vinyl pyridines, vinyl silanes, vinyl sulfones, and mixtures thereof. As before, polymers comprising these optional polymerizable units may be a random, blocked, or alternating polymers.

Examples of these optional polymerizable units include, without limitation:

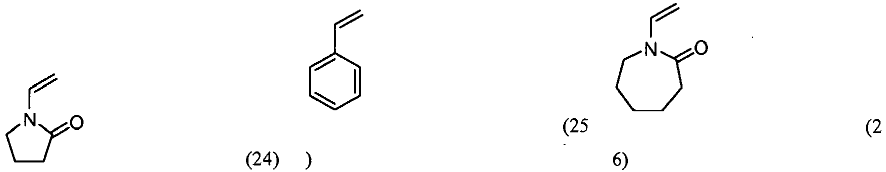

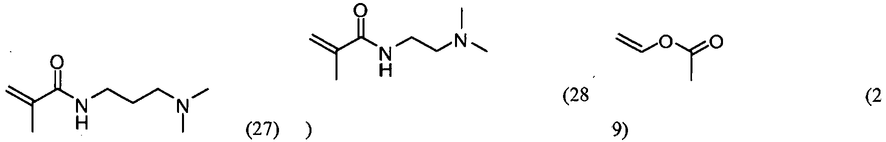

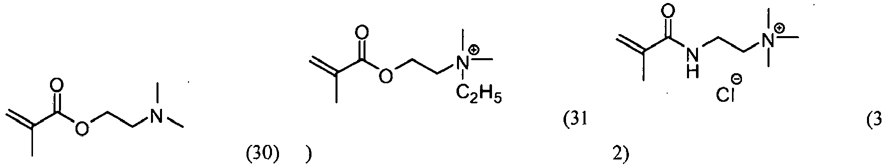

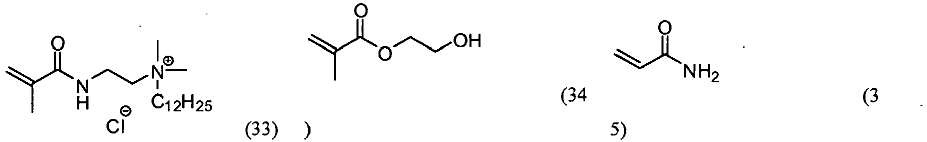

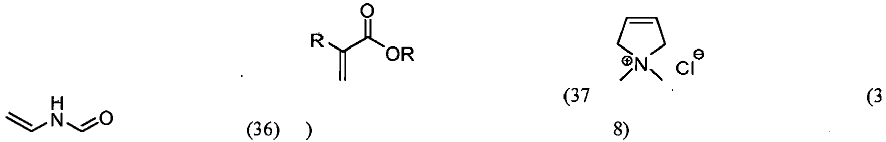

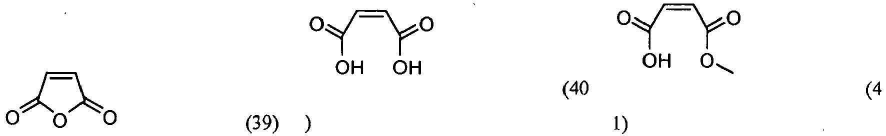

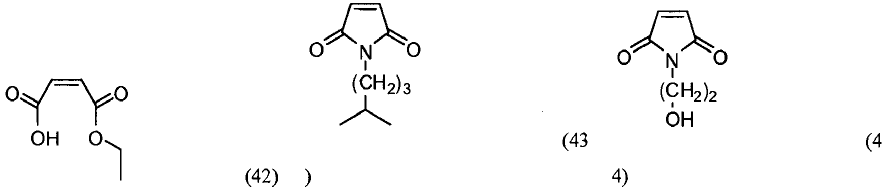

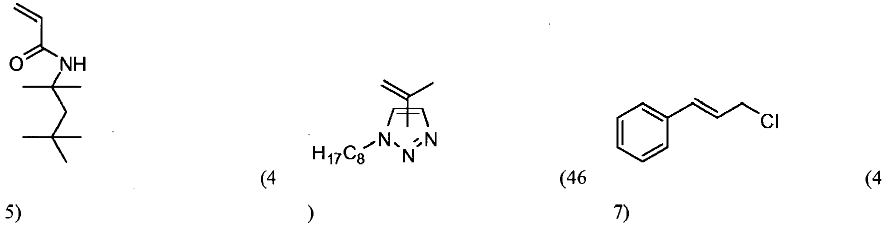

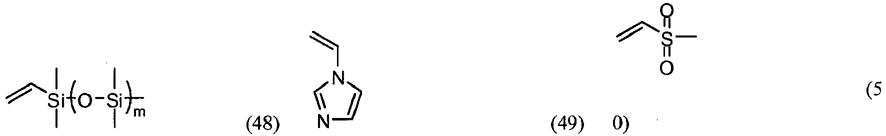

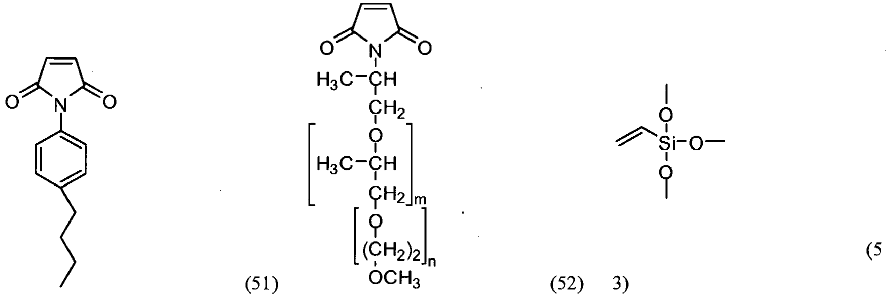

wherein each R is independently selected from the group consisting of hydrogen, and functionalized and unfunctionalized, alkyl, cycloalkyl, alkenyl, and aryl groups, wherein any of the beforementioned groups may be with or without heteroatoms, and m and n are integers greater than or equal to 1.

Additionally, preferred optional polymerizable units also include siloxane monomers, which are generally well-known and commercially available. Polysiloxane polymers and films thereof impart a wide variety of functional properties of great commercial value, such as: water repellency to glass, leather, paper, fabric surfaces and powder; environmental, mechanical, and dampening protection for microelectronic devices; release coatings; fabric softening, and adhesion promoters, and for use in the sensor, optoelectronics, and microelectronics industries.

Siloxane monomers are disclosed WO 2004/060975, and have the general formula:

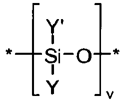

wherein **Y'** denotes hydrogen or an optionally substituted functional alkyl, alkyl, alkenyl, aryl, alkaryl or aralkyl group having 1 to 20 carbon atoms, Y denotes a substituted alkyl, aryl, alkaryl or aralkyl group having 1 to 20 carbon atoms, and v denotes an integer with values of from 3 to 1000.

The functional alkyl groups can be, for example: chloropropyl, acryloxypropyl and methacryloxypropyl. The alkyl groups can be, for example: methyl, ethyl, *n*-propyl. trifluoropropyl, *n*-butyl, sec-butyl and *t*-butyl. The alkenyl groups can be, for example: vinyl, allyl, propenyl, and butenyl. The aryl, alkaryl and aralkyl groups can be, for example, phenyl, tolyl, benzyl and phenypropyl. The preferred groups are hydrogen, methyl, ethyl, phenyl, trifluoropropyl, acryloxyproply, methacryloxypropyl and vinyl. Preferably, the value of **v** is from 3 to 500, most preferably from 4 to 200.

A (chain) terminating agent or end capper may be used to regulate the degree of polymerization of the polymer and/or to add functionality. Suitable siloxane-terminating agents have the general formula:

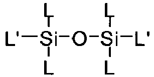

wherein **L**' denotes hydrogen or an optionally substituted functional alkyl, alkyl, alkenyl, aryl, alkaryl or aralkyl group having 1 to 8 carbon atoms, L denotes substituted alkyl, aryl, alkaryl or aralkyl group having 1 to 8 carbon atoms.

In the terminating agent, the functional alkyl groups can be for example: aminopropyl, acryloxypropyl, methacryloxypropyl, and epoxypropyl. The alkyl groups can be, for example: methyl, ethyl, *n*-propyl, trifluoropropyl, *n*-butyl, sec-butyl and *t*-butyl. The alkenyl groups can be, for example: vinyl, allyl, propenyl, and butenyl. The aryl, alkaryl and aralkyl groups can be, for example: phenyl, tolyl, benzyl and phenethyl. The preferred groups are hydrogen, methyl, ethyl, phenyl, trifluoropropyl, acryloxyproply, methacryloxypropyl and vinyl.

Also suitable as optional polymerizable units are those disclosed in U.S. Patent Application Publication No. 2007/0204412, which is hereby incorporated by reference. These monomers have the general formula:

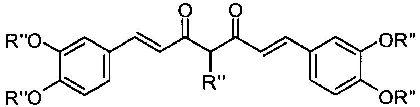

wherein R" is independently selected from the group consisting of hydrogen and branched and straight chain, substituted and unsubstituted groups selected from alkyl, alkenyl, alkoxy and alkenoxy groups of from 1 to about 5 carbon atoms, silane and siloxy groups of from 1 to about 15 carbon and/or silicon atoms in the primary chain, and alkoxysilane and alkenoxysilane groups of from 1 to about 15 carbon and/or silicon atoms in the primary chain.

Such monomers find application in a broad range of applications, including medical and diagnostic devices, and instrumentation and sensors.

Also suitable as optional polymerizable are vinyl-terminated polydimethylsiloxanes and vinyl-terminated fumed silica reinforced polydimethylsiloxanes, such as those offered into commercial sale by Gelest, Inc. (Morrisville, PA), having viscosities ranging from 0.7 cSt to 165,000 cSt.

Also suitable are the isocyanate silicones offered for commercial sale by Siltech Corp. of Toronto, ON, CA, and Siltech LLC of Dacula, GA, US. These isocyanates include Silmer^{®} NCO isocyanate functional pre-polymer, which is available as multi- and linear-difunctional configurations, as well as varying molecular weight.

### Synthesis of the polymers

Polymerization methods known to one skilled in the art may be employed to create the polymers described herein. These methods include, but are not limited to: free radical polymerization, emulsion polymerization, ionic chain polymerization, and precipitation polymerization. Free radical polymerization is a preferred polymerization method, especially when using water-dispersible and/or water-soluble reaction solvent(s), and is described in "Decomposition Rate of Organic Free Radical Polymerization" by K.W. Dixon (section II in Polymer Handbook, volume 1, 4th edition, Wiley-Interscience, 1999), Another description of the free-radical polymerization process is given in U.S. Patent No. 2,882,262. Other polymerization methods, such as emulsion polymerization, suspension polymerization, gel polymerization, bead polymerization, and powder polymerization, also may be preferred based on considerations such as final polymer form and ease of production.

The reactants, comprising at least one first polymerizable unit and at least one second polymerizable unit, may be charged together into a reactor and stirred at a temperature to facilitate the reaction, being limited only by the decomposition temperature of any reactant. The reaction can be performed with and without added solvent. The addition of an optional inert solvent may be beneficial when a high viscosity of the reacting system limits effective reactive processing *(i.e.,* has a high viscosity).

It is within the scope of this invention to employ any combination of the first polymerizable unit with disclosed second polymerizable unit(s). It may be advantageous to add the least reactive reactants first, and the more reactive ones later in the preparation. As necessary, additional reactive species can be attached to the polymer.

There is great flexibility in selecting the addition levels of the polymerizable units, which results in a wide range of properties for the described polymers. For example, when the polymer is a copolymer, then the *N*-hydroxyalkyl lactam may comprise from 1 mol % to 99 mol % of the copolymer, and the second polymerizable unit may comprise from 1 mol % to 99 mol % of the total copolymer. Alternatively, the same molar range applies to each polymerizable unit when the polymer is a terpolymer.

It may be beneficial and desirable to remove any amount of unreacted reactant and/or side product from the final reaction product using methods that are known in the art.

The reaction may be carried out for times ranging from 30 seconds to 48 hours or even more, and may depend upon factors that include (1) the reactivity of the reactants, (2) the number of reactive groups, since one or more of the reactants may have more than one reactive group, (3) steric hindrance surrounding any reactive site, (4) the reaction temperature employed, (5) the presence or absence of a solvent, and (6) the use or non-use of an initiator and/or catalyst. With the use of an optional reaction solvent or solvents, it may be preferred to remove the solvent(s) after the reaction, *e.g.*, at reduced pressure and/or elevated temperature, and then to add a different solvent conducive to the final formulation.

Typically, the molecular weight of the polymer ranges from 200 amu to 5,000,000 amu, and more preferably the molecular weight ranges from a 2,000 amu to 1,000,000 amu. As described later, the molecular weight of a polymerized product may be modulated by the addition of an optional chain transfer agent to the reaction vessel.

For solution reactions, temperatures may be conveniently controlled by judicious choice of solvents within an appropriate boiling range. Temperatures in this case range from 20°C to about 225°C, preferably from 75°C to 200°C, and most preferably from 80°C to 200°C. Reaction times for solvent reaction range from several minutes to 48 hours or more. Higher reaction temperatures and highly reactive reactants will reduce time for conversion to the desired product(s). Preferably, solvent reaction times will be between 15 minutes and 8 hours and most preferably between 15 minutes and 4 hours. In addition, azeotropic water removal (when possible) from the solvent will facilitate most solvent reactions.

In some synthesis routes, an initiator is not needed to produce the disclosed polymers. Due to the broad nature of the invention, there may be times when an free radical addition polymerization initiator may be beneficial.

Compounds capable of initiating the free-radical addition polymerization include those materials known to function in the prescribed manner, and include the peroxo and azo classes of materials. Exemplary peroxo and azo compounds include, but are not limited to: acetyl peroxide; azo bis-(2-amidinopropane) dihydrochloride; azo bisisobutyronitrile (AIBN); 2,2'-azo bis-(2-methylbutyronitrile); benzoyl peroxide; di-*tert-*amyl peroxide; di-*tert*-butyl diperphthalate; butyl peroctoate; *tert*-butyl dicumyl peroxide; *tert-butyl* hydroperoxide; *tert*-butyl perbenzoate; *tert*-butyl permaleate; *tert*-butyl perisobutylrate; *tert*-butyl peracetate; *tert*-butyl perpivalate; para-chlorobenzoyl peroxide; cumene hydroperoxide; diacetyl peroxide; dibenzoyl peroxide; dicumyl peroxide; didecanoyl peroxide; dilauroyl peroxide; diisopropyl peroxodicarbamate; dioctanoyl peroxide; lauroyl peroxide; octanoyl peroxide; succinyl peroxide; and bis-(ortho-toluoyl) peroxide. AIBN is a preferred initiator for a number of the preferred compositions described herein.

Also suitable to initiate the free-radical polymerization are initiator mixtures or redox initiator systems, including: ascorbic acid/iron(II) sulfate/sodium peroxodisulfate, *tert*-butyl hydroperoxide/sodium disulfite, and *tert*-butyl hydroperoxide/sodium hydroxymethanesulfinate.

A chain transfer agent optionally may be used to control the degree of polymerization of the polymer, and thereby control the molecular weight and molecular weight distribution of the product. As a skilled artisan can appreciate, typically, the chain transfer agent becomes part of the polymer.

The chain transfer agent may be of the kind that has a carbon-sulfur covalent bond. The carbon-sulfur covalent bond has usually absorption peak in a wave number region ranging from 500 to 800 cm⁻¹ in an infrared absorption spectrum. When the chain transfer agent is incorporated into the polymer, the absorption peak of the product may be changed in comparison to product made without a chain transfer agent.

Exemplary chain transfer agents include, but are not limited to, *n*-C3-15 alkylmercaptans such as *n*-propylmercaptan, *n*-butylmercaptan, *n*-amylmercaptan, *n-*hexylmercaptan, *n*-heptylmercaptan, *n*-octylmercaptan, *n*-nonylmercaptan, *n-*decylmercaptan, and *n*-dodecylmercaptan; branched alkylmercaptans such as isopropylmercaptan, isobutylmercaptan, s-butylmercaptan, *tert*-butylmercaptan, cyclohexylmercaptan, *tert*-hexadecylmercaptan, *tert*-laurylmercaptan, *tert*-nonylmercaptan, *tert*-octylmercaptan, and *tert*-tetradecylmercaptan; aromatic ring-containing mercaptans such as allylmercaptan, 3-phenylpropylmercaptan, phenylmercaptan, and mercaptotriphenylmethane. As a skilled artisan understands, the term -mercaptan and - thiol may be used interchangeably to mean C-SH group.

Typical examples of such chain transfer agents also include, but are not limited to, dodecanethiol, butanethiol, isooctyl-3-mercaptopropionate, 2-methyl-5-*tert*-butyl-thiophenol, carbon tetrachloride, carbon tetrabromide, and the like. Dodecanethiol and carbon tetrabromide are most typically used.

Based on total weight of the monomers to be polymerized, the chain transfer agent may generally be present in an amount from 0.1% to 7%, including from 0.5% to 6%, and from 1.0% to 5%, although it may be present in greater or lesser amounts.

A catalyst, such as dibutyltin dilaurate, used in the customary amounts, can be used to alter the reaction rate, *e.g.*, speeding the reaction and/or favoring one product over side products.

Due to the broad invention scope, many different polymers may be synthesized using the methods described above. By way of illustration, when the first polymerizable unit is *N-*hydroxyethyl-2-pyrrolidone methyl methacrylate and the second polymerizable unit is a higher order alkylacrylamide (meaning not acrylamide nor methacrylamide), such as *N-tert*-octylacrylamide, which is offered for sale by Frinton Laboratories (Hainesport, NJ) and Advanced Technology and Industrial Co., Ltd (Hong Kong). The free-radical polymerization reaction and resulting polymer can be represented by: 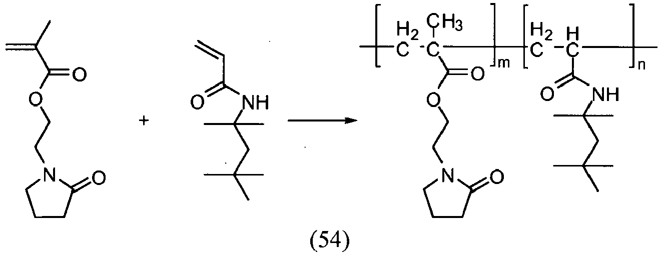 wherein m and n are integers greater than 1. Other alkylacrylamides analogues also can be used for the polymerization, wherein increasing the molecular weight of the alkyl group tends to increase the polymer's hydrophobicity. Using linear alkyl groups (instead of branched alkyl) tends to lower the polymer's glass transition temperature and/or enhance polymer flexibility

Another polymer of the invention can be produced by the free radical polymerization of *N-*hydroxyethyl-2-pyrrolidone methyl methacrylate and a polymerizable triazole, including the 1,4- and 1,5-octyl methyl vinyl triazole isomers:

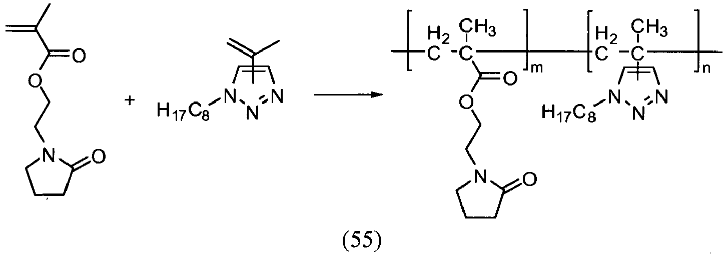

In a third illustration of the invention, polymers are provided by the free-radical polymerization of *N-*hydroxyethyl-2-pyrrolidone methyl methacrylate and a maleimide, such as 1-(4-butylphenyl)-1*H*-pyrrole-2,5-dione:

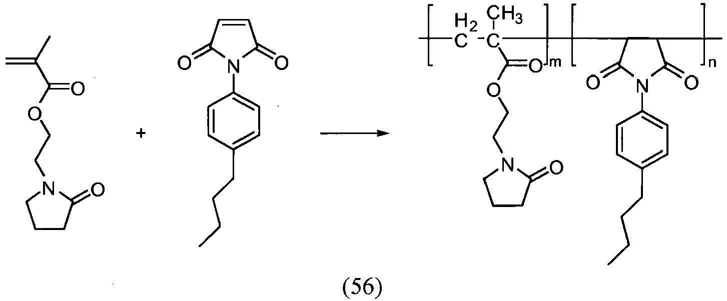

Of course, other illustrations of the invention also exist, such as the free-radical polymerization of *N-*hydroxyethyl-2-pyrrolidone methyl methacrylate and *N*-vinyl, imidazole:

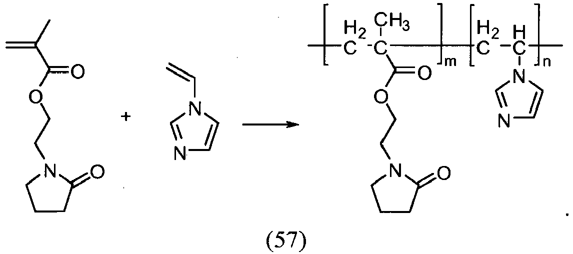

As a fifth illustration, non-homopolymers can be synthesized by a first polymerizable unit such as *N-*hydroxyethyl-2-pyrrolidone methyl methacrylate and a second polymerizable unit that possesses cinnamyl functionality, such as cinnamyl chloride:

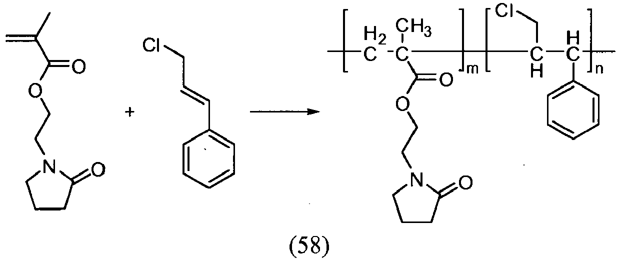

Also provided are polymers produced by the free-radical polymerization of *N-*hydroxyethyl-2-pyrrolidone methyl methacrylate and a vinyl siloxane, such as vinyl pentamethyldisiloxane, which is offered for commercial sale by Gelest Inc (Morrisville, PA):

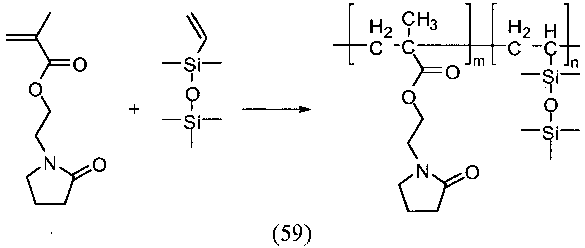

Such polymers may find special application in personal care compositions, such as for hair and/or skin formulations.

A seventh illustration is given by the free-radical polymerization of a first polymerizable unit of the invention, such as *N-*hydroxyethyl-2-pyrrolidone methyl methacrylate and a vinyl sulfone, for example methyl vinyl sulfone:

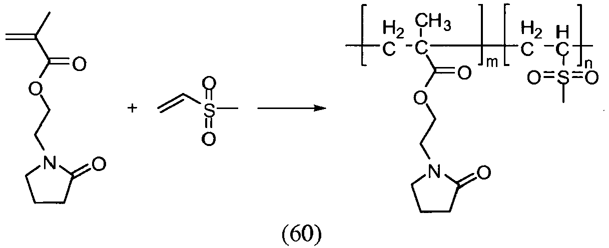

For a final illustration, polymers of the invention also include free-radical polymerization products of a first polymerizable unit, such as *N*-hydroxyethyl-2-pyrrolidone methyl methacrylate and a vinyl silane, which may be vinyl trimethoxysilane:

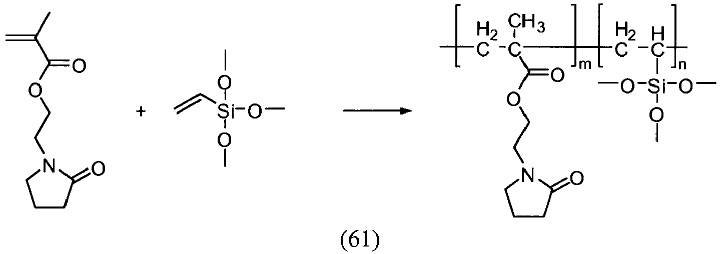

In each of the illustrations presented in this section, the polymer is a random, blocked, or alternating polymer. One skilled in the art can identify other first and second polymerizable units that conform to the descriptions provided herein to produce other polymers that are contemplated within the scope of the invention.

### Applications

Because the hydrophilic-to-hydrophobic balance of the polymers described herein can be adjusted by proper selection of the first and second polymerizable units (and the constituent groups thereof), polymers of the invention find use in a wide variety of applications. Contemplated is their use in: adhesives and adhesive promoters; antennae for radio-frequency identification (RFID); binders (for wood, rubber, recycled materials, flooring, carpet underlays, moulding for steel casting); circuit board fabrication; coatings (*e.g.,* for steel, concrete, wood, cellulose materials; release coatings); fabric softening; footware *(e.g.,* soles); foam (bedding, car seats, filling material, furniture, headrests, mattresses, pillows, transportation cabin components); elastomers *(e.g.,* rollers, belts, roller blades, printing rollers, hoses); insulation (residential, commercial, institutional constructions); medical and diagnostic devices/instrumentation/sensors; microelectronic devices *(e.g.,* for environmental, mechanical, and dampening protection; and sensors and optoelectronics); rigid insulating foam; sealants; underfill encapsulants; and water repellency *(e.g.,* glass, leather, paper, fabric surfaces, powders)

### Characterizing the reaction product

Polymers of this invention can be analyzed by known techniques to characterize the product. Especially preferred are the techniques of ¹³C nuclear magnetic resonance (NMR) spectroscopy, gas chromatography (GC), and gel permeation chromatography (GPC) in order to decipher polymer identity, residual monomer concentrations, polymer molecular weight, and polymer molecular weight distribution.

Nuclear magnetic resonance (NMR) spectroscopy is an especially preferred method to probe the polymerization product in terms of chemical properties such as monomeric composition, sequencing and tacticity. Analytical equipment suitable for these analyses include the Inova 400-MR NMR System by Varian Inc. (Palo Alto, CA). References broadly describing NMR include: Yoder, C.H. and Schaeffer Jr., C.D., Introduction to Multinuclear NMR, The Benjamin/Cummings Publishing Company, Inc., 1987; and Silverstein, R.M., et al., Spectrometric Identification of Organic Compounds, John Wiley & Sons, 1981, which are incorporated in their entirety by reference.

Residual monomer levels can be measured by GC, which can be used to indicate the extent of reactant conversion by the polymerization process. GC analytical equipment to perform these tests are commercially available, and include the following units: Series 5880, 5890, and 6890 GC-FID and GC-TCD by Agilent Technologies, Inc. (Santa Clara, CA). GC principles are described in Modern Practice of Gas Chromatography, third edition (John Wiley & Sons, 1995) by Robert L. Grob and Eugene F. Barry, which is hereby incorporated in its entirety by reference.

GPC is an analytical method that separates molecules based on their hydrodynamic volume (or size) in solution of the mobile phase, such as hydroalcoholic solutions with surfactants. GPC is a preferred method for measuring polymer molecular weight distributions. This technique can be performed on known analytical equipment sold for this purpose, and include the TDAmax™ Elevated Temperature GPC System and the RImax™ Conventional Calibration System by Viscotek™ Corp. (Houston, TX). In addition, GPC employs analytical standards as a reference, of which a plurality of narrow-distribution polyethylene glycol and polyethylene oxide standards representing a wide range in molecular weight is the preferred. These analytical standards are available for purchase from Rohm & Haas Company (Philadelphia, PA) and Varian Inc. (Palo Alto, CA). GPC is described in the following texts, which are hereby incorporated in their entirety by reference: Schroder, E., et al., Polymer Characterization, Hanser Publishers, 1989; Billingham, N.C., Molar Mass Measurements in Polymer Science, Halsted Press, 1979; and Billmeyer, F., Textbook of Polymer Science, Wiley Interscience, 1984.

The present invention is further illustrated by reference to the following non-limiting examples.

### EXAMPLES

### Example 1: N-hydroxyethyl-2-pyrrolidone methacrylate and N-tert-octylacrylamide copolymer

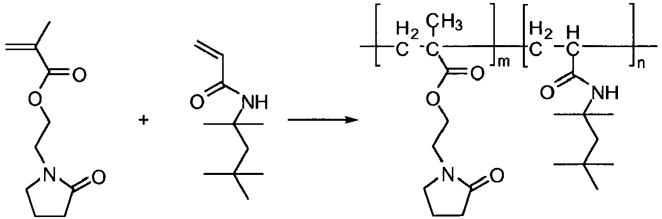

The initiator solution was prepared immediately before the reaction by mixing 2,2'-azobisisobutyronitrile (AIBN) (0.36 g) with ethanol (40 g) in a flask.

*N-*hydroxyethyl-2-pyrrolidone methacrylate (47.5 g) and *N-tert*-octylacrylamide (2.5 g) were combined in a 4-neck, round-bottom 250 mL flask equipped with oil bath, temperature probe/controller, mechanical mixer, nitrogen purge/bubbler, reflux condenser and thermometer. Ethanol (18 mL) was added to the flask and the contents mixed, after which distilled water (32 mL) also was added with additional mixing. A hazy solution was produced. Afterward, the solution was purged with subsurface nitrogen for 30 minutes. Additional ethanol (54 mL) and distilled water (96 mL) were added to the to a reaction flask, creating a solution of about 20% total solids. Then, the flask was heated. When the contents reached 65°C, 30 minutes of subsurface nitrogen purging was begun. After purging, the reaction temperature was further heated to a target temperature of about 75°C while maintaining the nitrogen purge. Initiator solution (1.1 mL) was added to the flask *via* syringe. Then, after 30 minutes another charge of initiator solution (1.1 mL) was added and the reaction flask. After 1 hour, a third charge of initiator (1.1 mL) was added to the flask, which was held at 75°C for 1.5 hours. Initiator solution (2.2 mL) was injected into the flask every two hours until the concentration of *N-*hydroxyethyl-2-pyrrolidone methacrylate monomer fell below 1000 ppm, as confirmed by GC analysis.

Upon completion, the foamy, viscous reaction product was cooled to room temperature (about 22°C) and discharged from the flask. The polymer was identified by NMR as the named copolymer.

The weight-average molecular weight and gas hydrate induction time also were measured. The polymer is a random, alternating, or block polymer. The structural subscripts "m" and "n" are integers equal to or greater than 1 such that the number of each monomer unit yields a polymer having a molecular weight between 500 amu and 5,000,000.

### Example 2: N-hydroxyethyl-2-pyrrolidone methacrylate and 4-butyl phenyl maleimide copolymer

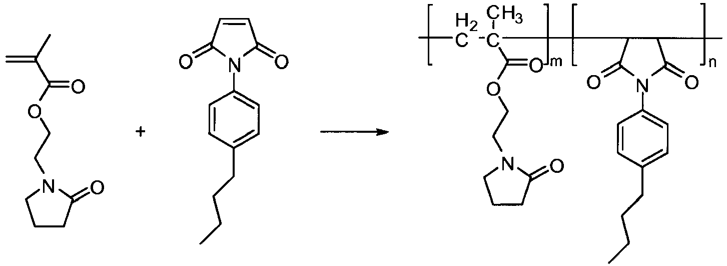

The method described in Example 1 was repeated, except replacing *N-tert-*octylacrylamide by 4-butyl phenyl maleimide.

Upon completion, the viscous reaction product was cooled to room temperature (about 22°C) and discharged from the flask. The polymer was identified by NMR as the named copolymer.

The weight-average molecular weight and gas hydrate induction time also were measured. The polymer is a random, alternating, or block polymer. The structural subscripts "m" and "n" are integers equal to or greater than 1 such that the number of each monomer unit yields a polymer having a molecular weight between 500 amu and 5,000,000.

The invention has been described in detail with particular reference to particular embodiments thereof, but it will be understood that variations and modifications can be effected within the spirit and scope of the invention.

## Claims

1. A polymer derived from at least one first polymerizable unit is represented by the structure: 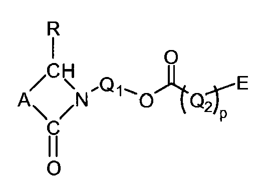 and at least one second polymerizable unit selected from the group consisting of alkylacrylamides excluding acrylamide and methacrylamide, cinnamyls, maleimides, vinyl imidazoles, vinyl triazoles, vinyl silanes, vinyl siloxanes, vinyl sulfones, benzoxazines, oxazolines, oxetanes and epoxides, wherein said polymer is a random, blocked, or alternating polymer,
wherein:
A is an alkylene or alkenylene group comprising 2 to 50 carbon atoms, wherein 2 to 4 carbon atoms reside in the lactam ring between the 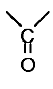 group and the 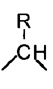 group;
**E** is a polymerizable moiety selected from the group consisting of: alkylacrylamides excluding acrylamide and methacrylamide, acrylates, allyl derivatives, benzoxanes, cinnamyls, epoxides, fumarates, maleates, maleimides, α,β-olefinically unsaturated carboxylic nitriles, oxazolines, oxetanes, styrenes, vinyl acetates, vinyl acrylamides, vinyl amides, vinyl carbonates, vinyl ethers, vinyl halides, vinyl imidazoles, vinyl lactams, vinyl pyridines, vinyl silanes, vinyl sulfones, and mixtures thereof;
**p** is 0 or 1;
each of **Q**₁ and **Q**₂ is independently selected from the group consisting of functionalized and unfunctionalized alkylene, alkenylene, cycloalkylene and arylene groups, wherein any of the beforementioned groups may be with or without heteroatoms and linear or branched; and
each **R** is independently selected from the group consisting of hydrogen, and functionalized and unfunctionalized alkyl, cycloalkyl, alkenyl, and aryl groups, wherein any of the beforementioned groups may be with or without heteroatoms and linear or branched, and
wherein when **Q**₁ is ethylene and **E** is an epoxide moiety that said second polymerizable unit is not an epoxide.

2. The polymer of claim 1 wherein said first polymerizable unit is represented by the structure: 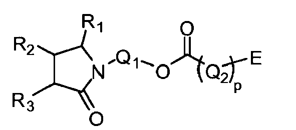 or 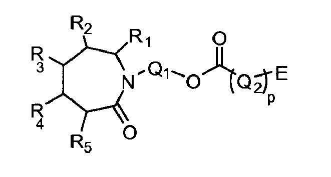 wherein each of **R**₁**, R**₂, **R**₃**, R**₄**,** and **R**₅ is independently selected from the group consisting of hydrogen, and functionalized and unfunctionalized alkyl, cycloalkyl, alkenyl, and aryl groups, wherein any of the beforementioned groups may be with or without heteroatoms and linear or branched.

3. The polymer of claim 2 wherein said first polymerizable unit is represented by the structure: 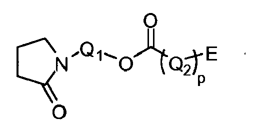 or

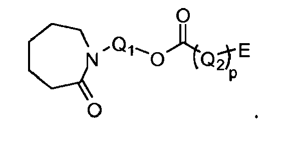

4. The polymer of claim 3 wherein said first polymerizable unit is represented by one of the following structures:

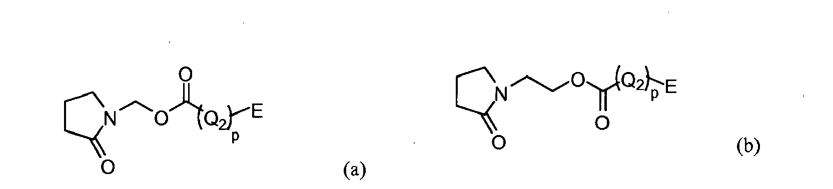

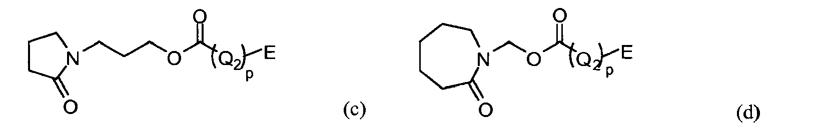

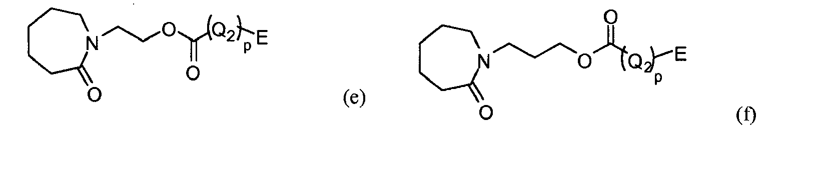

5. The polymer of claim 4 wherein said first polymerizable unit is represented by one of the following structures:

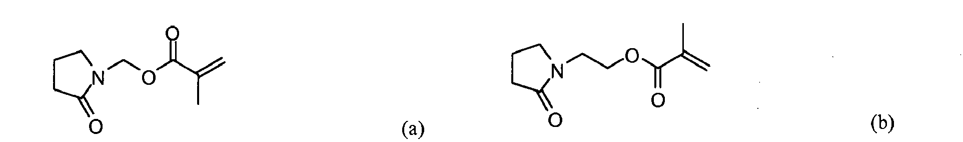

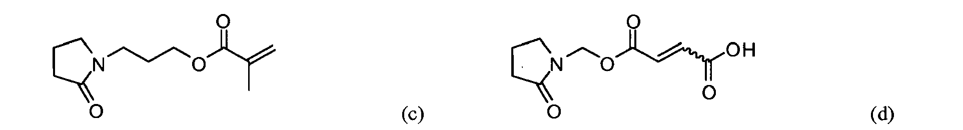

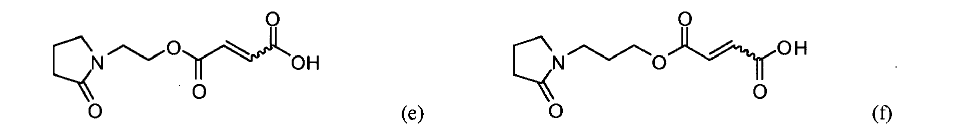

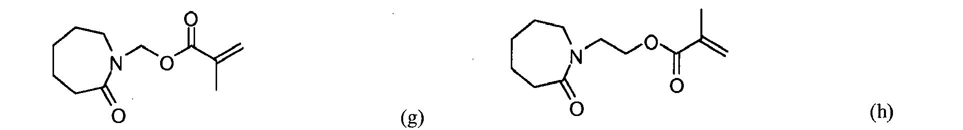

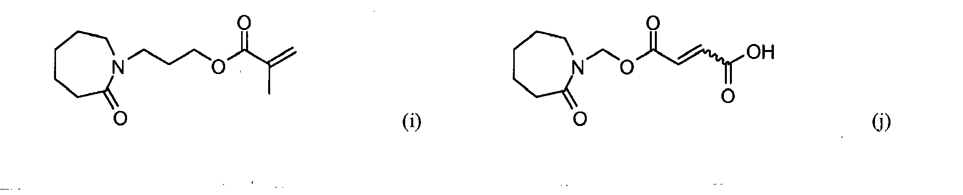

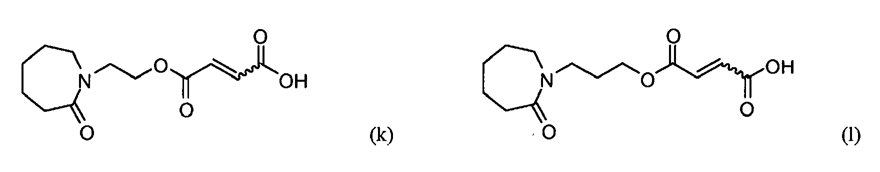

6. The polymer of claim 1 wherein said polymer is a copolymer.

7. The polymer of claim 6 wherein said copolymer comprises from about 1% to about 99% of the first polymerizable unit, and from about 1% to about 99% of the second polymerizable unit.

8. The polymer of claim 1 wherein said polymer is a terpolymer.

9. The polymer of claim 8 wherein said terpolymer comprises from about 1% to about 99% of the first polymerizable unit, from about 1% to about 99% of the second polymerizable unit and from about 1% to about 99% of a third polymerizable unit.

10. A composition comprising a polymer according to any one of claims 1 - 9.

11. A composition according to claim 10 wherein said composition is an adhesive, agricultural, biocide, cleaning, coating, encapsulation, membrane, oilfield, performance chemical, or personal care composition.

## Patentansprüche

1. Ein Polymer, das von wenigstens einer ersten polymerisierbaren Einheit, die durch die folgende Struktur dargestellt wird: 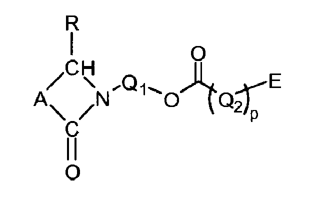 und wenigstens einer zweiten polymerisierbaren Einheit ausgewählt aus der Gruppe bestehend aus Alkylacrylamiden, wobei Acrylamid und Methacrylamid ausgenommen sind, Zimtverbindungen, Maleimiden, Vinylimidazolen, Vinyltriazolen, Vinylsilanen, Vinylsiloxanen, Vinylsulfonen, Benzoxazinen, Oxazolinen, Oxetanen und Epoxiden stammt,
wobei das Polymer ein statistisches Polymer, ein Blockpolymer oder ein alternierendes Polymer ist,
wobei:
**A** eine Alkylen- oder Alkenylengruppe umfassend 2 bis 50 Kohlenstoffatome ist, wobei sich 2 bis 4 Kohlenstoffatome in dem Lactamring zwischen der 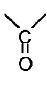 Gruppe und der 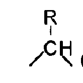 Gruppe befinden;
**E** eine polymerisierbare Funktionalität ausgewählt aus der Gruppe bestehend aus Alkylacrylamiden, wobei Acrylamid und Methacrylamid ausgenommen sind, Acrylaten, Allylderivaten, Benzoxanen, Zimtverbindungen, Epoxiden, Fumaraten, Maleaten, Maleimiden, α,β-olefinisch ungesättigten Carbonsäurenitrilen, Oxazolinen, Oxetanen, Styrolen, Vinylacetaten, Vinylacrylamiden, Vinylamiden, Vinylcarbonaten, Vinylethern, Vinylhalogeniden, Vinylimidazolen, Vinyllactamen, Vinylpyridinen, Vinylsilanen,
Vinylsulfonen und deren Mischungen ist;
p 0 oder 1 ist;
jede der Einheiten **Q**₁ und **Q**₂ unabhängig voneinander ausgewählt wird aus der Gruppe bestehend aus funktionalisierten und unfunktionalisierten Alkylen-, Alkenylen-, Cycloalkylen- und Arylengruppen, wobei jede der vorstehend genannten Gruppen Heteroatome aufweist oder keine Heteroatome aufweist und linear oder verzweigt ist;
und
jede Funktionalität **R** unabhängig voneinander ausgewählt wird aus der Gruppe bestehend aus Wasserstoff und funktionalisierten und unfunktionalisierten Alkyl-, Cycloalkyl-, Alkenyl- und Arylgruppen, wobei jede der vorstehend genannten Gruppen Heteroatome aufweist oder keine Heteroatome aufweist und linear oder verzweigt ist,
und
wobei sofern **Q**₁ Ethylen ist und **E** eine Epoxidfunktionalität ist, die zweite polymerisierbare Einheit kein Epoxid ist.

2. Das Polymer gemäß Anspruch 1, wobei die erste polymerisierbare Einheit durch die Struktur: 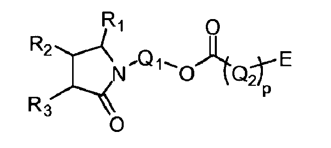 oder 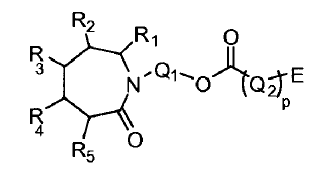 dargestellt wird,
wobei jede der Funktionalitäten **R₁, R₂, R₃, R**₄ und **R**₅ unabhängig voneinander ausgewählt wird aus der Gruppe bestehend aus Wasserstoff, und funktionalisierten und unfunktionalisierten Alkyl-, Cycloalkyl-, Alkenyl-, und Arylgruppen, wobei jede der vorstehend genannten Gruppen Heteroatome aufweist oder keine Heteroatome aufweist und linear oder verzweigt ist.

3. Das Polymer gemäß Anspruch 2, wobei die erste polymerisierbare Einheit durch die Struktur: 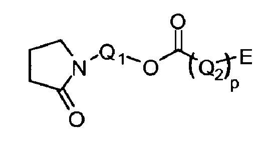 oder 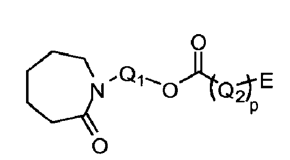 dargestellt wird.

4. Das Polymer gemäß Anspruch 3, wobei die erste polymerisierbare Einheit durch eine der folgenden Strukturen dargestellt wird:

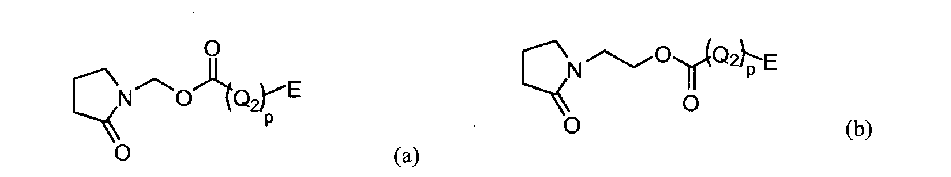

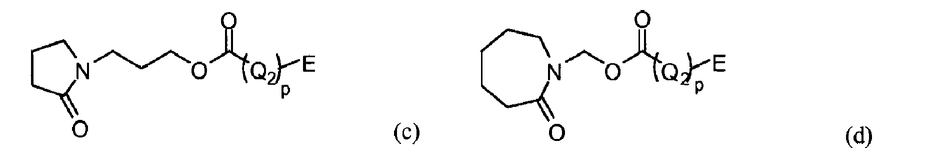

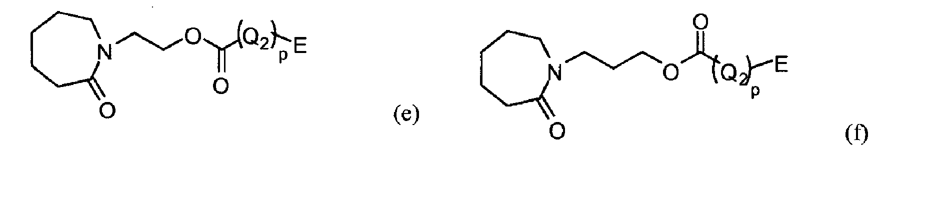

5. Das Polymer gemäß Anspruch 4, wobei die erste polymerisierbare Einheit durch eine der folgenden Strukturen dargestellt wird:

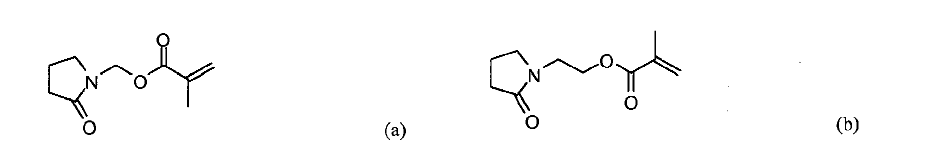

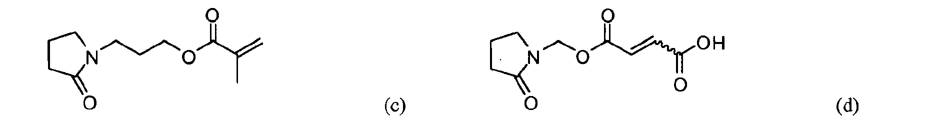

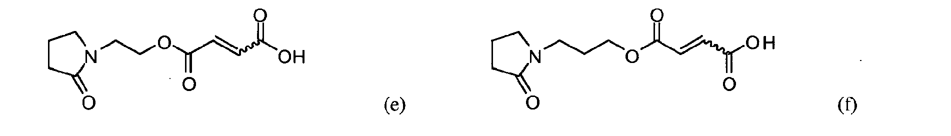

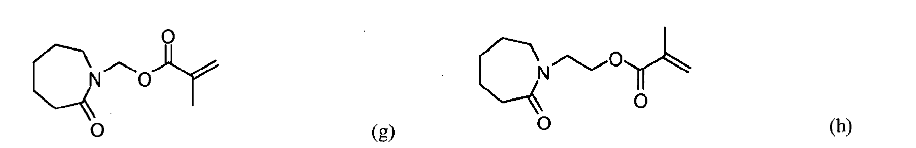

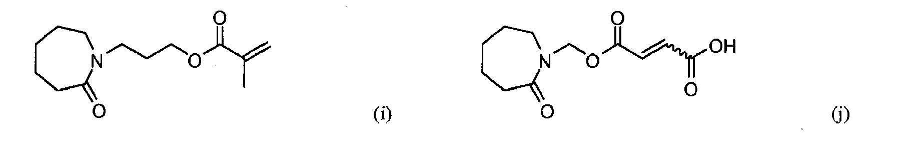

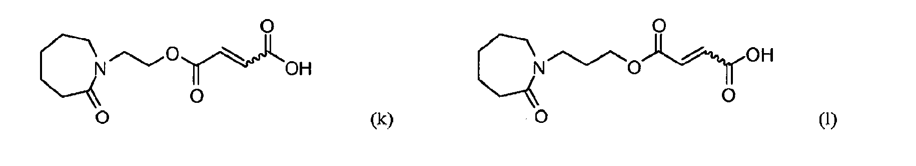

6. Das Polymer gemäß Anspruch 1, wobei das Polymer ein Copolymer ist.

7. Das Polymer gemäß Anspruch 6, wobei das Copolymer von ungefähr 1% bis ungefähr 99% der ersten polymerisierbaren Einheit und von ungefähr 1% bis ungefähr 99% der zweiten polymerisierbaren Einheit umfasst.

8. Das Polymer gemäß Anspruch 1, wobei das Polymer ein Terpolymer ist.

9. Das Polymer gemäß Anspruch 8, wobei das Terpolymer von ungefähr 1 % bis ungefähr 99% der ersten polymerisierbaren Einheit, von ungefähr 1% bis ungefähr 99% der zweiten polymerisierbaren Einheit und von ungefähr 1% bis ungefähr 99% der dritten polymerisierbaren Einheit umfasst.

10. Eine Zusammensetzung umfassend ein Polymer gemäß einem der Ansprüche 1 bis 9.

11. Eine Zusammensetzung gemäß Anspruch 10, wobei die Zusammensetzung eine Klebstoff-, Agrar-, Biozid-, Reinigungs-, Beschichtungs-, Verkapselungs-, Membran-, Ölfeld-, Veredelungschemikalien- oder Körperpflegezusammensetzung ist.

## Revendications

1. Polymère dérivé d'au moins un premier motif polymérisable, représenté par la structure : 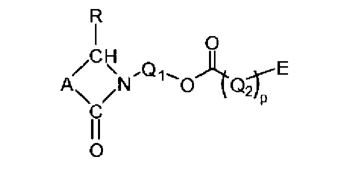 et au moins un deuxième motif polymérisable choisi dans le groupe constitué par les alkylacrylamides à l'exclusion de l'acrylamide et du méthacrylamide, les cinnamyles, les maléimides, les vinylimidazoles, les vinyltriazoles, les vinylsilanes, les vinylsiloxanes, les vinylsulfones, les benzoxazines, les oxazolines, les oxétanes et les époxydes, ledit polymère étant un polymère aléatoire, bloc ou alterné, où :
**A** représente un groupement alkylène ou alcénylène comportant entre 2 et 50 atomes de carbone, où 2 à 4 atomes de carbone sont inclus dans le cycle lactame entre le groupement 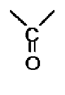 et le groupement 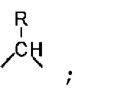
**E** représente une entité polymérisable choisie dans le groupe constitué par : les alkylacrylamides à l'exclusion de l'acrylamide et du méthacrylamide, les acrylates, les dérivés allyliques, les benzoxanes, les cinnamyles, les époxydes, les fumarates, les maléates, les maléimides, les nitriles carboxyliques à insaturations α,β-oléfiniques, les oxazolines, les oxétanes, les styrènes, les acétates de vinyle, les vinylacrylamides, les vinylamides, les carbonates de vinyle, les éthers vinyliques, les halogénures de vinyle, les vinylimidazoles, les vinyllactames, les vinylpyridines, les vinylsilanes, les vinylsulfones, et leurs mélanges ;
**p** est égal à 0 ou à 1 ;
chacun des radicaux **Q**₁ et **Q**₂ est indépendamment choisi dans le groupe constitué par les groupements fonctionnalisés et non fonctionnalisés alkylène, alcénylène, cycloalkylène et arylène, chacun des groupements susmentionnés pouvant éventuellement comporter des hétéroatomes et étant linéaire ou ramifié ; et
chacun des radicaux **R** est indépendamment choisi dans le groupe constitué par l'atome d'hydrogène et les groupements fonctionnalisés et non fonctionnalisés alkyle, cycloalkyle, alcényle et aryle, où chacun des groupements susmentionnés pouvant éventuellement comporter des hétéroatomes et étant linéaire ou ramifié, et
où lorsque **Q**₁ représente un groupement éthylène et E représente une entité époxyde, ledit deuxième motif polymérisable n'est pas un époxyde.

2. Polymère selon la revendication 1, où ledit premier motif polymérisable est représenté par la structure : 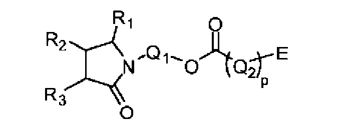 ou 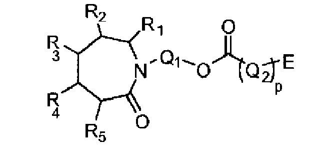 chacun des radicaux **R₁, R₂, R₃, R₄** et **R₅** étant indépendamment choisi dans le groupe constitué par l'atome d'hydrogène et les groupements fonctionnalisés et non fonctionnalisés alkyle, cycloalkyle, alcényle et aryle, chacun des groupements susmentionnés pouvant éventuellement comporter des hétéroatomes et étant linéaire ou ramifié.

3. Polymère selon la revendication 2, où ledit premier motif polymérisable est représenté par la structure : 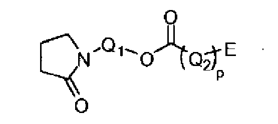 ou

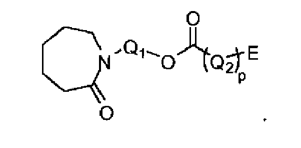

4. Polymère selon la revendication 3, où ledit premier motif polymérisable est représenté par l'une des structures suivantes :

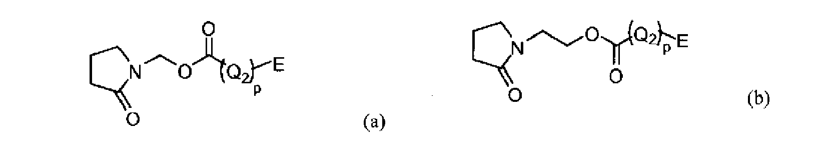

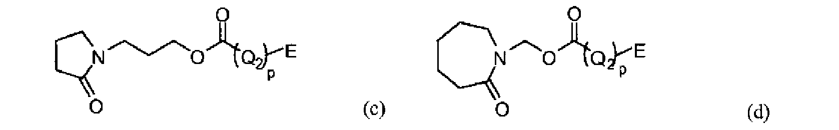

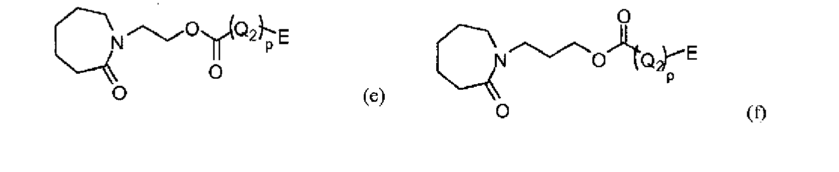

5. Polymère selon la revendication 4, où ledit premier motif polymérisable est représenté par l'une des structures suivantes :

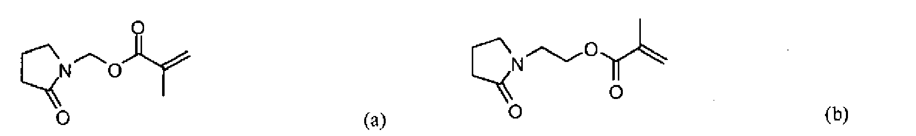

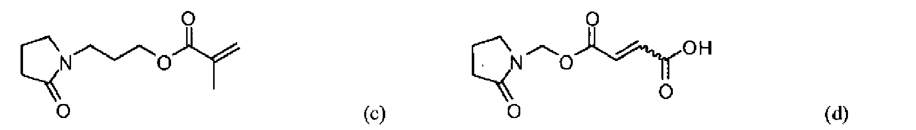

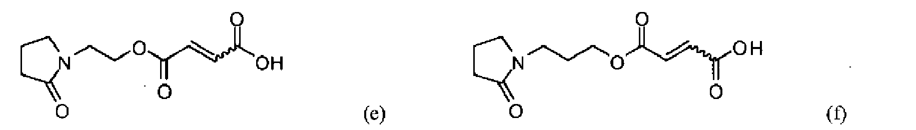

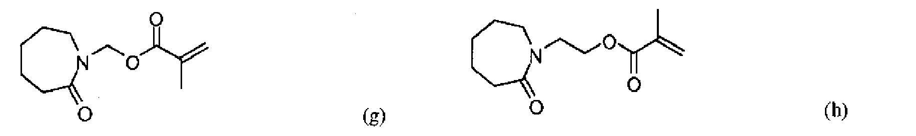

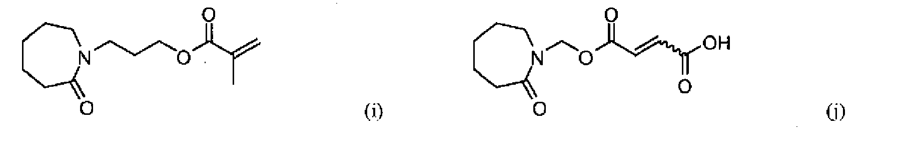

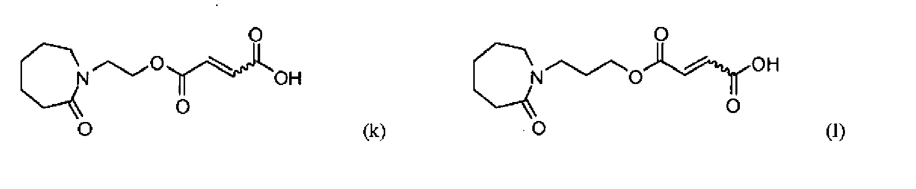

6. Polymère selon la revendication 1, où ledit polymère est un copolymère.

7. Polymère selon la revendication 6, où ledit copolymère comprend entre environ 1 % et environ 99 % du premier motif polymérisable, et entre environ 1 % et environ 99 % du deuxième motif polymérisable.

8. Polymère selon la revendication 1, où ledit polymère est un terpolymère.

9. Polymère selon la revendication 8, où ledit terpolymère comprend entre environ 1 % et environ 99 % du premier motif polymérisable, entre environ 1 % et environ 99 % du deuxième motif polymérisable, et entre environ 1 % et environ 99 % d'un troisième motif polymérisable.

10. Composition comprenant un polymère selon l'une quelconque des revendications 1 à 9.

11. Composition selon la revendication 10, où ladite composition est un adhésif, un agent agricole, un biocide, un agent nettoyant, un agent de revêtement, un agent d'encapsulation, une membrane, un agent pour exploitation pétrolière, un produit chimique de performance ou une composition de soins personnels.
